(19) **Europäisches Patentamt / European Patent Office / Office européen des brevets**

(11) **EP 3 086 933 B1**

(12) **FASCICULE DE BREVET EUROPEEN**

(45) Date de publication et mention
de la délivrance du brevet:
**05.09.2018 Bulletin 2018/36**

(21) Numéro de dépôt: **14830977.6**

(22) Date de dépôt: **18.12.2014**

(51) Int Cl.:
**B29D 30/54** (2006.01)      **B29C 65/34** (2006.01)

(86) Numéro de dépôt international:
**PCT/FR2014/053418**

(87) Numéro de publication internationale:
**WO 2015/097376 (02.07.2015 Gazette 2015/26)**

(54) **PROCEDE DE RECHAPAGE D'UN PNEUMATIQUE PAR EFFET JOULE**

VERFAHREN ZUM REIFENRUNDERNEUERN UNTER VERWENDUNG DES JOULE-EFFEKTS

METHOD FOR TYRE RETREADING USING JOULE EFFECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363429**

(43) Date de publication de la demande:
**02.11.2016 Bulletin 2016/44**

(73) Titulaire: **Compagnie Générale des Etablissements Michelin
63000 Clermont-Ferrand (FR)**

(72) Inventeur: **MARCET, Grégory
F-63040 Clermont-Ferrand Cedex 9 (FR)**

(74) Mandataire: **Noel, Luminita et al
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
WO-A1-99/08860        AU-A- 8 292 775
AU-A- 8 292 875        FR-A1- 2 988 644
GB-A- 555 070          GB-A- 1 477 317
GB-A- 1 592 661        US-A1- 2011 056 603

• ANONYMOUS: "Electrical resistivity and conductivity", INTERNET CITATION, 2 October 2011 (2011-10-02), pages 1-8, XP007919566, Retrieved from the Internet: URL:https://en.wikipedia.org/w/index.php?t itle=Electrical_resistivity_and_conductivi ty&oldid=453562858 [retrieved on 2011-10-12]

**Description**

L'invention concerne le rechapage des pneumatiques.

Le rechapage d'une enveloppe de pneumatique consiste à enlever la bande de roulement usagée de l'enveloppe pour la remplacer par une bande de roulement en bon état, généralement neuve.

Il est connu à cette fin de prévoir entre la carcasse et la bande de roulement une couche de liaison thermofusible assurant l'adhérence de la bande à la carcasse et qui se ramollit lorsqu'elle est chauffée à une température prédéterminée, permettant ainsi de séparer facilement la bande de roulement de la carcasse. De même, lors de la mise en place de la nouvelle bande de roulement, on chauffe la couche thermofusible puis on la laisse refroidir pour faire adhérer la bande à la carcasse.

Il est connu d'effectuer ce chauffage par effet Joule au moyen d'un fil métallique contigu à la couche de liaison et parcouru par un courant électrique. Ce mode de chauffage est localisé et a notamment pour but d'économiser de l'énergie et d'éviter une surcuisson ou une nouvelle cuisson de l'enveloppe ou de certaines parties de l'enveloppe.

Toutefois, même en utilisant ce mode de chauffage local, il demeure difficile d'éviter un chauffage excessif de la gomme susceptible de l'endommager.

Il est certes connu d'utiliser un point de mesure local tel qu'un thermocouple pour surveiller la température de la couche de liaison. Toutefois, la mise en place d'un tel organe est contraignante. De plus, il ne donne la température qu'en un point particulier. Or ce point ne correspond pas à la zone la plus chaude et donc la plus sensible qui est formée par le contour des tronçons de fil chauffants en contact avec la gomme.

Dans le domaine du rechapage des pneus est bien connue l'utilisation d'une couche de liaison thermofusible assurant l'adhérence de la bande à la carcasse et qui se ramollit lorsqu'elle est chauffée à une température prédéterminée, permettant ainsi de séparer facilement la bande de roulement de la carcasse et pour faire adhérer une nouvelle bande de roulement à la carcasse: voir les documents US 2011/0056603 - A et FR 2988644 - A.

Il est aussi connu d'effectuer un chauffage localisé par effet Joule au moyen d'un fil métallique contigu à la couche de liaison et parcouru par un courant électrique. Ledit fil métallique peur être le fil de renforcement faisant partie de la ceinture du pneu et peut être réchauffé par induction, comme expliqué dans le document WO 99/08860 - A.

Selon les documents AU 8292775 - A, GB 1477317 - A et AU 8292875 - A, le courant électrique qui parcourt un fil métallique, qui ne fait pas partie des composants structurels du pneu, est contrôlé, par exemple utilisant un thermocouple incorporée dans le pneu, pour éviter un chauffage excessif.

Le document XP 007919566 représente un exposé théorique sur un phénomène physique, à savoir la conductivité et la résistivité électrique. Ce document ne propose aucune application concrète.

Un but de l'invention est de limiter encore les risques de chauffer excessivement la gomme lorsqu'on ôte la bande de roulement de la carcasse ou lorsqu'on applique une bande sur la carcasse.

À cet effet, on prévoit selon l'invention un procédé comme défini dans la revendication 1, dans lequel :

- on fait passer un courant électrique dans au moins un fil situé entre une carcasse d'une enveloppe de pneumatique et une bande de roulement,
- on calcule une valeur d'une température du fil en fonction d'une valeur relative au courant, et
- on commande le courant en fonction de la valeur de température calculée.

En effet, on sait déterminer la température d'un métal en fonction de sa résistivité et de son coefficient de température. Par ailleurs, la résistance du fil, elle-même corrélée à sa résistivité, est déterminée par la tension et l'intensité du courant qui le traverse selon la loi d'Ohm. Les caractéristiques du fil métallique étant connues, on peut commander sa température en commandant le courant qui le traverse. C'est donc la commande du courant électrique qui permet en temps réel de commander la température du fil et donc celle de la couche de liaison. Cette meilleure maîtrise de la température limite les risques de surcuisson ou de nouvelle cuisson de la gomme.

Des formes préférentielles de l'invention sont définies dans les revendications dépendantes. De préférence, le fil est contigu à une couche thermofusible.

Dans un mode de réalisation, on dispose le fil de sorte qu'il forme des ondulations en créneaux.

Avantageusement, on fait passer le courant dans au moins deux fils faisant partie d'une même section d'un faisceau.

Ainsi, par comparaison avec un faisceau à fil unique, à intensité de courant égale, la présence d'au moins deux fils permet de réduire la résistance électrique du faisceau et la tension du courant qui le traverse.

De préférence, on commande le courant de sorte que la valeur de température demeure en deçà d'un seuil prédéterminé.

On évite ainsi d'élever la gomme à une température excessive.

Dans un mode de réalisation, on commande le courant de sorte que la valeur de température connaisse une variation positive dépassant un seuil prédéterminé au cours d'une période prédéterminée.

Ainsi, on réduit le temps de montée en température du fil et de la couche de liaison. On obtient donc un chauffage particulièrement rapide et local de cette dernière sans trop chauffer la gomme au voisinage. Ce mode opératoire permet aussi de gagner du temps de refroidissement car l'énergie ainsi fournie ponctuellement et localement à la couche de liaison est ensuite très vite dissipée par la matière froide de la carcasse et/ou de la bande de roulement.

On peut prévoir qu'on sépare ensuite la bande de roulement et la carcasse.

Il s'agit donc de la mise en oeuvre de l'invention pour le déchapage.

On peut aussi prévoir que le procédé de l'invention forme un procédé de rechapage au cours duquel on assemble la bande de roulement à la carcasse.

On prévoit également selon l'invention une enveloppe de pneumatique, qui résulte d'un procédé selon l'invention.

On prévoit également selon l'invention une carcasse d'enveloppe de pneumatique dépourvue de bande de roulement et qui résulte d'un procédé selon l'invention.

On prévoit enfin selon l'invention une bande de roulement d'enveloppe de pneumatique dépourvue de carcasse et qui résulte d'un procédé selon l'invention.

Nous allons maintenant présenter des modes de mise en oeuvre de l'invention à titre d'exemples non limitatifs en référence aux dessins annexés sur lesquels :

- les figures 1 et 2 sont des vues en perspective avec arrachement de deux enveloppes de pneumatique faisant l'objet d'un procédé selon l'invention ;
- la figure 3 est une vue d'un schéma électrique utilisé lors du rechapage de l'enveloppe de la figure 2 ;
- les figures 4 et 5 sont des courbes montrant l'évolution de différentes grandeurs lors de la mise en oeuvre du procédé de l'invention sur les enveloppes des figures 1 et 2 ; et
- la figure 6 illustre les fils utilisés dans une variante de réalisation.

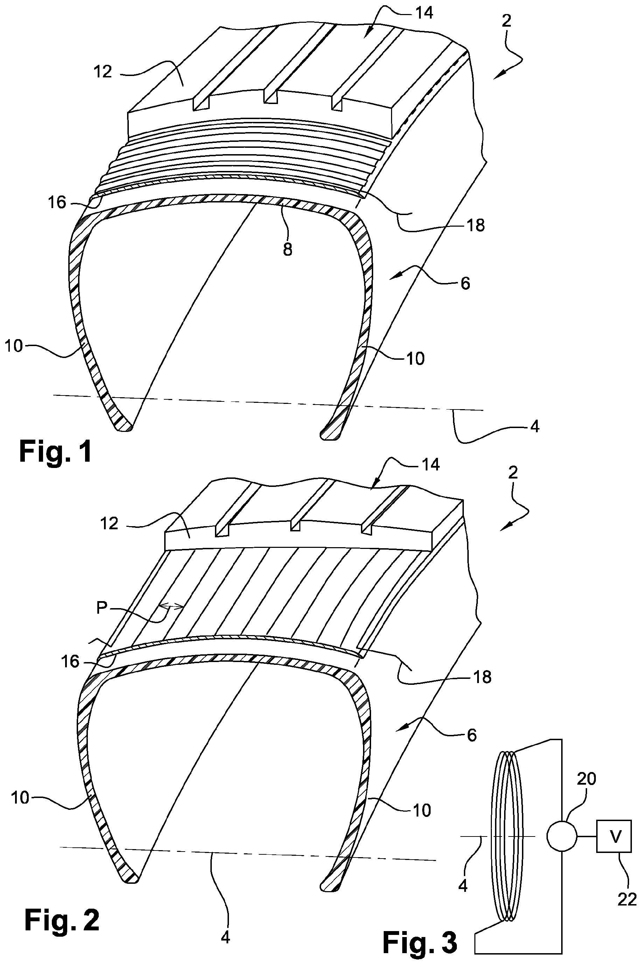

On a illustré à la figure 1 un premier mode de réalisation d'une enveloppe 2 de pneumatique de roue faisant l'objet d'un procédé de rechapage selon l'invention. L'enveloppe a une forme générale torique d'axe 4. Elle comprend une carcasse 6 comportant une couche sommet 8 et deux flancs latéraux 10. La carcasse a une forme profilée dont la section transversale a une forme de « U ».

L'enveloppe comprend une bande de roulement 12 fixée à la carcasse 6 d'un côté d'une face externe de la couche sommet 8. La bande de roulement 12 porte des sculptures et des sillons sur sa face externe 14, dont la forme détaillée n'a pas été illustrée.

Entre la carcasse et la bande de roulement est interposée une couche de liaison 16 réalisée dans un matériau thermofusible assurant l'adhérence de la bande de roulement à la carcasse à température ambiante mais apte à se ramollir lorsqu'il est porté à une température prédéterminée pour permettre la séparation de la bande par rapport à la carcasse.

Par matériau thermofusible, on comprend un matériau apte à se ramollir lorsqu'il est chauffé pour le porter à une température prédéterminée caractéristique du matériau, dite température de ramollissement. Par exemple, un tel matériau peut être choisi parmi les élastomères thermoplastiques tels que le SBS (styrène-butadiène-styrène) ou le SIS (styrène-isoprène-styrène). Pour les besoins de l'invention, on se réfère à un matériau thermofusible capable de ramollir à une température comprise entre 140°C et 200°C.

L'enveloppe comprend également un fil métallique 18 contigu à la couche de liaison. Dans le présent exemple, ce fil s'étend contre une face supérieure de la couche 16 et une face intérieure de la bande de roulement. Il présente ici des ondulations en créneaux ou en boustrophédon de sorte qu'il parcourt toute la largeur de la bande de roulement et de la couche de liaison d'un flanc 10 à l'autre puis, après avoir parcouru une courte distance suivant la direction circonférentielle, repart en direction de l'autre flanc. Le fil 18 s'étend ainsi sur toute la circonférence de la carcasse. Il forme des tronçons rectilignes s'étendant chacun dans un plan radial à l'axe 4, ces tronçons étant séparés par un pas constant suivant la direction circonférentielle.

On suppose maintenant que la bande de roulement 12 de cette enveloppe est usagée et nécessite d'être remplacée. On met donc en oeuvre le procédé de rechapage comme suit.

Pour cela, les deux extrémités du fil 18 étant accessibles, on les connecte à des moyens d'alimentation en courant électrique 20 tels que ceux illustrés sur la figure 3 en référence au deuxième mode de réalisation.

Le passage du courant provoque le chauffage du fil par effet Joule. La chaleur ainsi générée se diffuse dans la couche de liaison 16 qui, atteignant la température précitée, se ramollit.

On peut alors facilement séparer la bande de roulement par rapport à la carcasse. On suppose dans la suite que la couche de liaison 16 et le fil 18 demeurent sur la carcasse au cours de cette opération.

Au cours d'une étape suivante, on utilise une bande de roulement neuve 12. Il s'agit en l'espèce d'une bande en gomme cuite et qui a une configuration en anneau ouvert. On enroule donc la bande pour l'appliquer sur l'ensemble formé par la carcasse, la couche de liaison et le fil. On pourrait toutefois utiliser une bande de roulement ayant une configuration en anneau fermée et la disposer dans une telle configuration sur la carcasse au moyen d'un outillage adapté connu en lui-même.

Ensuite, on applique une pression sur la bande de roulement pour la plaquer contre la couche de liaison et la carcasse. Cette pression est comprise par exemple entre deux et trois bars, soit entre 2 et $3.10^5$ Pa. Pendant ce temps, on fait à nouveau passer un courant électrique dans le fil 18 afin de le chauffer par effet Joule et ainsi chauffer la couche de liaison 16 jusqu'à atteindre sa température de ramollissement. La couche de liaison devient donc plastique et vient en contact étroit avec la bande de roulement.

On interrompt ensuite le courant et on laisse refroidir l'ensemble. En retournant à l'état solide, la couche de liaison assure l'adhérence de la bande de roulement à la carcasse.

Si la couche de liaison 16 et le fil 18 sont éliminés avec la bande de roulement usagée, le même procédé peut être mis en oeuvre soit en disposant une nouvelle couche de liaison et un nouveau fil sur la carcasse avant la mise en place de la bande de roulement, soit en installant une bande de roulement équipée elle-même de la couche de liaison et du fil.

L'enveloppe du deuxième mode de réalisation illustré aux figures 2 et 3 ne diffère de celle de la figure 1 que par la configuration du fil. En effet, cette fois, le fil 18 forme des spires autour de l'axe 4, les spires successives étant séparées l'une de l'autre par un pas p variable suivant la direction de cet axe. Les spires sont réparties entre les flancs. Le reste du procédé est mis en oeuvre de la même façon que pour l'enveloppe de la figure 1.

Dans ces deux modes de réalisation, la configuration du fil permet un chauffage homogène de la couche de liaison en maîtrisant notamment la différence de température entre les zones situées entre les tronçons du fil et celles contiguës au fil.

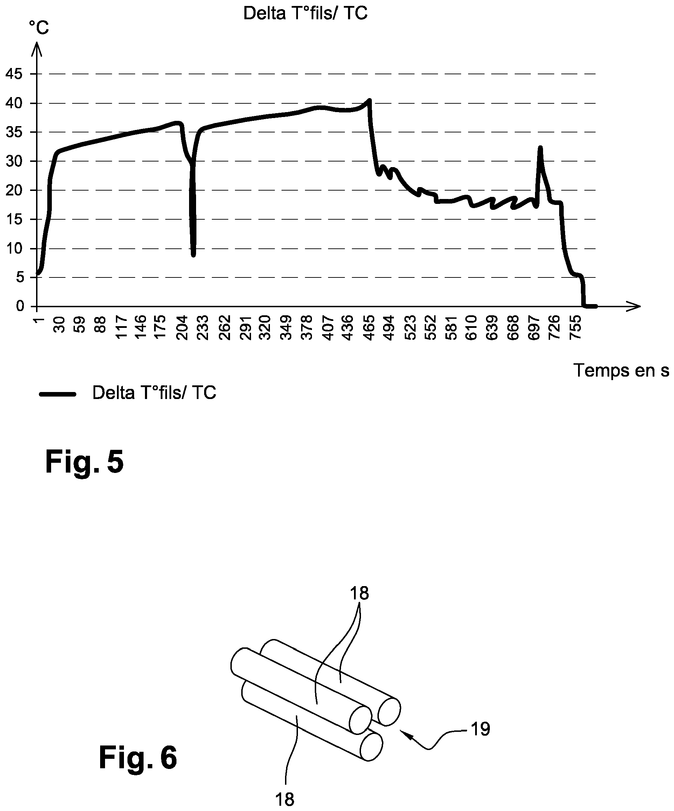

En référence à la figure 6, en lieu et place du fil unique utilisé dans les modes de réalisation des figures 1 et 2, on peut utiliser un faisceau 19 comprenant plusieurs fils 18 dans une même section, par exemple au nombre de deux ou trois. Pour une même intensité de courant, cet agencement permet de diminuer la résistance électrique des conducteurs et donc la tension électrique du courant.

Nous allons maintenant expliquer comment est effectuée l'alimentation en courant du fil dans chacun de ces modes de réalisation conformément à un mode de mise en oeuvre de l'invention.

L'organe 20 est configuré pour permettre une alimentation électrique variable en courant et/ou en tension. Il comprend à cette fin des moyens de commande 22.

On utilise en l'espèce une alimentation en courant continu. Et on rappelle que la résistance R du fil obéit à la loi d'Ohm :

$$U = RI$$

où U et I désignent respectivement la tension aux bornes du fil et l'intensité du courant qui le traverse.

On sait par ailleurs que la résistivité d'un métal à une température quelconque T est donnée par la loi suivante :

$$\rho = \rho_0 \, (1 + \alpha T)$$

où :

$\rho_0$ est la résistivité du métal à 0 °C, et
$\alpha$ est son coefficient de température.

On suppose qu'on connaît la résistivité à 0°C du fil chauffant et son coefficient de température. On connaît donc sa résistivité et en conséquence sa résistance R en fonction de la température T.

Par ailleurs, on connaît en temps réel pendant le processus de chauffe l'intensité, la tension et la puissance du courant électrique.

On est donc en mesure de calculer en temps réel la température T au coeur du fil chauffant au moyen de l'une au moins de grandeurs U et I caractérisant le courant.

Dans le présent exemple, les moyens 22 sont configurés et programmés pour effectuer ce calcul en temps réel. On commande donc le courant au moyen de l'organe 20 tout en surveillant la température T au coeur du fil calculée et actualisée en temps réel.

On peut donc surveiller en permanence qu'on ne dépasse pas un seuil de température prédéterminé pour ne pas endommager la gomme. Ce seuil est fixé par exemple à 180 °C ou 200 °C.

Dans le présent mode de mise en oeuvre, tout en respectant cette dernière consigne, on commande aussi le courant de sorte que la valeur de température T connaisse une variation positive dépassant un seuil prédéterminé au cours d'une période prédéterminée. En d'autres termes, on fait monter la température de façon brutale sur une courte période. Il s'agit par exemple de faire passer la température de 25°C à 175°C, soit une variation de 150°C, en 500 secondes ou moins. Ainsi, on optimise le temps de montée en température du fil et donc de la couche de liaison située à proximité. On obtient ainsi un chauffage particulièrement rapide et local, ce qui évite aussi d'exposer la gomme environnante à une température trop élevée pendant une période trop longue. Ce mode de mise en oeuvre permet aussi de gagner en temps de refroidissement de la couche de liaison car l'énergie ainsi fournie ponctuellement et localement à cette dernière est très vite dissipée dans la matière froide environnante de l'enveloppe.

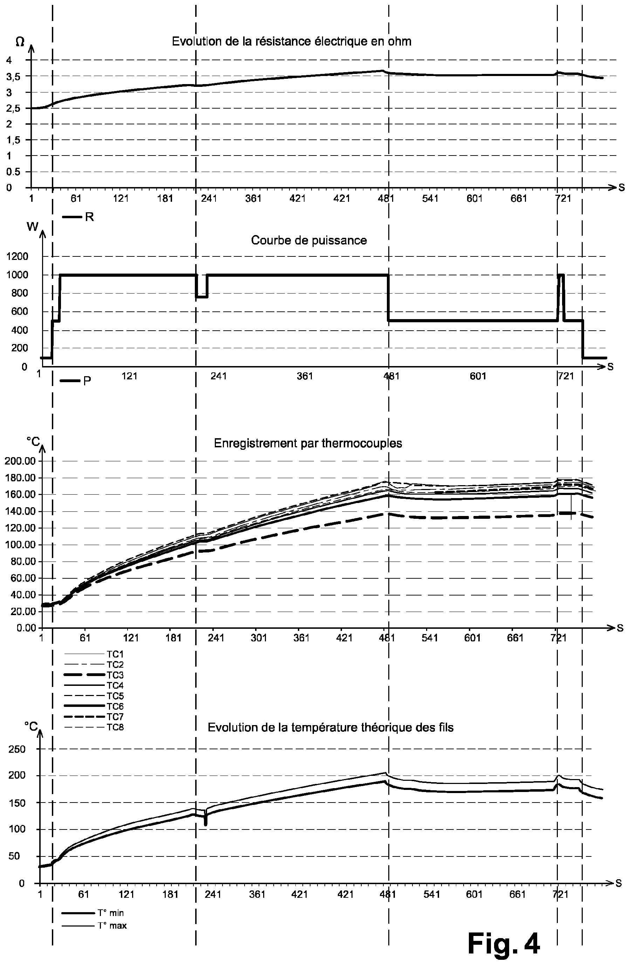

Des résultats d'expérimentation sont illustrés sur les figures 4 et 5. Toutes les courbes couvrent la même période indiquée en abscisse, d'environ 800 secondes. Il s'agit de la phase de montée en température de l'enveloppe.

La première courbe montre l'évolution de la résistance électrique R du fil 18 en ohms. On observe que la résistance varie modérément entre 2,5 et 3,5 ohms.

La deuxième courbe montre l'évolution de la puissance électrique fournie à l'élément chauffant. On peut voir que l'on effectue des variations brutales de la puissance fournie afin de visualiser dans les autres courbes la réponse du système en température et en résistance.

Le troisième graphique illustre les courbes donnant les valeurs de température fournies par huit thermocouples situés à différents endroits de la couche de liaison.

Le quatrième graphique montre l'évolution de la température T du fil telle que calculée en fonction de la résistance ohmique, de la résistivité du fil et de son coefficient de température. On a représenté par deux courbes séparées une valeur minimale et une valeur maximale pour tenir compte des erreurs de mesure des appareils utilisés.

On observe que la température de la couche de liaison, illustrée par les courbes du troisième graphique, suit de près les variations lentes et rapides de la température du fil chauffant illustrée par le quatrième graphique. Il y a cependant un écart de température entre les deux qui est illustré sur le graphique de la figure 5 et qui est fonction de la puissance fournie par le fil.

Ces tests montrent donc qu'on peut déterminer de bonnes estimations de la température du fil et de la couche de liaison à partir de grandeurs du courant électrique et ainsi éviter une surchauffe au niveau de la gomme et du fil chauffant. Bien entendu, on pourra apporter à l'invention de nombreuses modifications sans sortir du cadre de celle-ci.

## Revendications

1. Procédé dans lequel on fait passer un courant électrique dans au moins un fil (18) situé entre une carcasse (6) d'une enveloppe de pneumatique et une bande de roulement (12), **caractérisé en ce que** :

   - on calcule une valeur d'une température du fil en fonction d'une valeur relative au courant, et
   - on commande le courant en fonction de la valeur de température calculée.

2. Procédé selon la revendication précédente dans lequel on dispose le fil de sorte qu'il forme des spires centrées sur un axe principal (4) de la carcasse.

3. Procédé selon au moins l'une quelconque des revendications précédentes dans lequel on fait passer le courant dans au moins deux fils (18) faisant partie d'une même section d'un faisceau.

4. Procédé selon au moins l'une quelconque des revendications précédentes dans lequel on commande le courant de sorte que la valeur de température demeure en deçà d'un seuil prédéterminé.

5. Procédé selon au moins l'une quelconque des revendications précédentes dans lequel on commande le courant de sorte que la valeur de température connaisse une variation positive dépassant un seuil prédéterminé au cours d'une période prédéterminée.

6. Procédé selon au moins l'une quelconque des revendications précédentes dans lequel on sépare ensuite la bande de roulement (12) et la carcasse (6).

7. Procédé selon au moins l'une quelconque des revendications 1 à 5 formant un procédé de rechapage au cours duquel on assemble la bande de roulement (12) à la carcasse.

## Patentansprüche

1. Verfahren, bei dem ein elektrischer Strom durch mindestens einen Draht (18) geführt wird, der sich zwischen einer Karkasse (6) eines Reifenmantels und einem Laufstreifen (12) befindet, **dadurch gekennzeichnet, dass**:

   - ein Wert einer Temperatur des Drahts abhängig von einem Wert bezüglich des Stroms berechnet wird, und
   - der Strom abhängig vom berechneten Temperaturwert gesteuert wird.

2. Verfahren nach dem vorhergehenden Anspruch, wobei der Draht so angeordnet wird, dass er auf eine Hauptachse (4) der Karkasse zentrierte Windungen bildet.

3. Verfahren nach mindestens einem der vorhergehenden Ansprüche, wobei der Strom durch mindestens zwei Drähte (18) geführt wird, die Teil eines gleichen Querschnitts eines Bündels sind.

4. Verfahren nach mindestens einem der vorhergehenden Ansprüche, wobei der Strom so gesteuert wird, dass der Temperaturwert unterhalb einer vorbestimmten Schwelle bleibt.

5. Verfahren nach mindestens einem der vorhergehenden Ansprüche, wobei der Strom so gesteuert wird, dass der Temperaturwert eine positive Veränderung erfährt, die während einer vorbestimmten Periode eine vorbestimmte Schwelle überschreitet.

6. Verfahren nach mindestens einem der vorhergehenden Ansprüche, wobei der Laufstreifen (12) und die Karkasse (6) anschließend getrennt werden.

7. Verfahren nach mindestens einem der Ansprüche 1 bis 5, das ein Runderneuerungsverfahren bildet, während dessen der Laufstreifen (12) mit der Karkasse zusammengebaut wird.

## Claims

1. Method wherein an electric current is passed through at least one wire (18) situated between a carcass (6) of a tyre casing and a tread (12), **characterized in that**

- a value of a temperature of the wire is calculated as a function of a relative value of the current, and
- the current is controlled as a function of the temperature value calculated.

2. Method according to the preceding claim, wherein the wire is disposed such that it forms turns centred on a main axis (4) of the carcass.

3. Method according to at least any one of the preceding claims, wherein the current is passed through at least two wires (18) that form part of one and the same section of a harness.

4. Method according to at least any one of the preceding claims, wherein the current is controlled such that the temperature value remains below a predetermined threshold.

5. Method according to at least any one of the preceding claims, wherein the current is controlled such that the temperature value undergoes a positive variation exceeding a predetermined threshold during a predetermined period.

6. Method according to at least any one of the preceding claims, wherein the tread (12) and the carcass (6) are then separated.

7. Method according to at least any one of Claims 1 to 5, forming a retreading method during which the tread (12) is fitted on the carcass.

**Fig. 1**

**Fig. 2**

**Fig. 3**

Fig. 4

## Delta T°fils/ TC

°C

— Delta T°fils/ TC

# Fig. 5

# Fig. 6

18

18

19

## RÉFÉRENCES CITÉES DANS LA DESCRIPTION

**Documents brevets cités dans la description**

- US 20110056603 A
- FR 2988644 A
- WO 9908860 A
- AU 8292775 A
- GB 1477317 A
- AU 8292875 A